# EUROPÄISCHE PATENTSCHRIFT

(11) **EP 2 811 200 B1**
(45) Veröffentlichungstag und Bekanntmachung des Hinweises auf die Patenterteilung: **08.05.2019**
(21) Anmeldenummer: 14157113.3
(22) Anmeldetag: 28.02.2014
(51) Int. Cl.: F16G 1/16, B29B 15/12, B29D 29/08, F16G 1/08, F16G 1/10, F16G 5/06, F16G 5/08, F16G 5/14

(54) **Verfahren zur Fertigung eines PU-Riemens mit Zugträgern**
Method for producing a PU belt with tension members
Procédé de fabrication d'une courroie en PU avec supports de traction

(30) Priorität: 08.05.2013 DE 102013104764
(43) Veröffentlichungstag der Anmeldung: 10.12.2014
(73) Patentinhaber: ContiTech Antriebssysteme GmbH, 30165 Hannover (DE)
(72) Erfinder: Brocke, Stephan, 22143 Hamburg (DE); Göser, Hubert, 29451 Dannenberg (DE); Kucharczyk, Andre, 29499 Gülden (DE)
(74) Vertreter: Preusser, Andrea

(56) Entgegenhaltungen:
- WO-A1-2013/050143
- DE-A1-102011 054 976
- DE-A1-102011 054 978
- JP-A- H 102 379
- US-A- 3 349 634

## Beschreibung

Die Erfindung betrifft ein Verfahren zur Fertigung eines Riemens, der einen Riemenkörper aus einem Polyurethan mit elastischen Eigenschaften, umfassend eine Decklage als Riemenrücken und einen Unterbau mit einer Kraftübertragungszone, und einen in dem Riemenkörper eingebetteten Zugträger umfasst.

Ein Riemen der oben genannten Art spielt insbesondere in der Antriebstechnik eine herausragende Rolle. Derartige Riemen, die auch als Antriebsriemen oder Kraftübertragungsriemen bezeichnet werden, können als Flachriemen, Keilriemen, Keilrippenriemen, Zahnriemen oder als Verbundseile ausgebildet sein. Die Kraftübertragungszone korrespondiert dabei mit dem Riementrieb. Diesbezüglich wird insbesondere auf folgende Patentliteratur verwiesen: DE 38 23 157 A1, DE 100 16 351 A1, DE 10 2006 007 509 A1, DE 10 2007 062 285 A1, DE 10 2008 012 044 A1, DE 10 2009 044 153 A1, EP 0 841 500 A2, WO 2005/080821 A1, WO 2006/066669 A1, WO 2011/068729 A1, US 3 981 206, US 5 417 618 DE102011054978, WO2013/050143 und US 6 491 598.

Darüber hinaus ist es bekannt, Riemen zur Förderung von Materialien einzusetzen, wobei derartige Riemen auch als Transportbänder oder Fördergurte bezeichnet werden. Die Decklage als Riemenrücken ist dann die tragseitige Deckplatte für das Fördermaterial. Der Unterbau ist dann die laufseitige Deckplatte, die Kontakt mit einer Antriebstrommel hat. Die Elastizität eines Riemens wird dadurch erreicht, dass der Riemenkörper und somit die Decklage und der Unterbau aus einem polymeren Material mit elastischen Eigenschaften bestehen, wobei hier insbesondere die beiden Materialgruppen Elastomere und thermoplastische Elastomere zu nennen sind.

Von besonderer Bedeutung sind Elastomere auf der Basis einer vernetzten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), teilhydrierter oder hydrierter Nitrilkautschuk (HNBR), Fluor-Kautschuk (FKM), Naturkautschuk (NR), ChloroprenKautschuk (CR), Styrol-Butadien-Kautschuk (SBR), Butadien-Kautschuk (BR) oder Polyurethan (PU) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM, PU oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungs-schutzmittel sowie gegebenenfalls weitere Zusatzstoffe, beispielsweise Fasern zwecks Verstärkung und Farbpigmente. Diesbezüglich wird auf den allgemeinen Stand der Kautschukmischungstechnologie verwiesen.

Der Riemen ist mit einem eingebetteten Zugträger versehen, der aus wenigstens einem in Riemenlängsrichtung verlaufenden Zugstrang gebildet ist. Zumeist bilden mehrere Zugstränge eine Zugträgerlage. Von besonderer Bedeutung ist dabei ein Zugstrang in Cordkonstruktion, wobei es diesbezüglich nach dem Stand der Technik verschiedene Werkstoffkonzeptionen gibt. Die wesentlichen Werkstofftypen sind: Stahl, Polyamid (PA), Aramid, Polyester, Carbon (Kohle), Basalt, Polyetheretherketon (PEEK), Polyethylentherephthalat (PET), Polybenzoxazol (PBO) oder Polyethylen-2,6-naphthalat (PEN).

Insbesondere die Kraftübertragungszone eines Riemens für die Antriebstechnik wird mit einer abriebfesten Beschichtung versehen, die zusätzlich zur Geräuschreduzierung dient und zudem noch ölbeständig ausgerüstet sein kann. Eingesetzt wird dabei eine Flockauflage, insbesondere in Form eines Baumwoll- oder Aramidflocks, eine dünne mit Fasern (z.B. Aramidfasern) gefüllte elastische Polymerschicht, eine Textilauflage, insbesondere in Form eines Gewebes, Gewirkes oder Gestrickes, oder eine Folie (z.B. PTFE-Folie) oder ein Folienverbund (z.B. PA-PTFE-Folie). Von besonderer Bedeutung ist das Gewebe. Die hier genannten Beschichtungen werden auf der Kontaktseite zum Riemenkörper, insbesondere zu dessen Unterbau, zumeist haftfreundlich präpariert, beispielsweise mit einem Resorcin-Formaldehyd-Latex (RFL).

Im Folgenden wird nun auf den Stand der Technik der Präparation des Zugträgers näher eingegangen.

In EP 0 841 500 A2 wird ein Zahnriemen vorgestellt, bei dem der Riemenkörper aus einem gegossenen Polyurethan besteht. Der eingebettete Zugträger in Cordkonstruktion ist aus Carbon-Fasern gebildet, verbunden mit einer Cordbearbeitung. Nachteilig ist, dass die gleiche Polyurethangießmasse den Riemenkörper bilden und gleichzeitig den Zugträger füllen soll. Beim Gießen des Riemens kann daher nur ein Teil der Zugträgerhohlräume mit der Riemenmaterial ausgefüllt werden, so dass eine Füllung nur in gewissen Grenzen abhängig von Parametern wie Viskosität des Riemenmaterials und äußerer Druck möglich ist. Das Innere der Faserbündel kann nur schwer erreicht werden. Es wird angegeben, dass mindestens 0,2 mg Riemenmaterial pro mm³ Zugträgervolumen aufgenommen werden.

DE 102010043322 beschreibt einen Riemen, bei dem in einem vorgeschalteten Verfahren Zwischenräume in Kohlenfasern einer Zugbewehrung mit einem Bruchverminderungsfüllstoff gefüllt werden, der von dem elastischen Werkstoff des Riemenkörpers verschieden ist. Bei der Einbettung der Zugbewehrung in den Riemenkörper sollen weniger als 0,2 mg des elastischen Werkstoffs des Riemenkörpers pro mm³ Cordvolumen in die Zugbewehrung eindringen.

WO 2011/068729 A1 beschreibt einen Riemen, dessen Zugträger in Cordkonstruktion mit einem vernetzten Polyurethan präpariert ist. Der Füllungsgrad der Zugträgerhohlräume mit dem vernetzten Polyurethan beträgt vorzugsweise 20 % bis 100 %. Zur Bildung eines Polyurethan-Präpolymers werden Polyole ausgewählt aus Polyesterpolyolen, Polycarbonatpolyolen und Polyetherpolyolen als Komponente A und Diisocyanate als Komponente B umgesetzt. Das gebildete Polyurethan-Präpolymer kann dann anschließend mit einem Diamin und/oder mit Wasser, insbesondere mit Wasser, vernetzt werden.

In WO 2011/068729 A1 wird auch im Rahmen einer vorgeschalteten Verfahrensstufe ein Präparationsverfahren für den Zugträger vorgestellt, und zwar ein sogenanntes "Zwei-Bäder-Konzept". Dabei wird der Zugträger mit einem Gemisch aus einem Polyurethan-Präpolymer und einem inerten Lösungsmittel bzw. Dispergiermittel getränkt, wobei die Zugträgerhohlräume mit diesem Gemisch zumindest teilweise gefüllt werden. Danach erfolgt eine Trocknung. Anschließend erfolgt eine Vernetzung mit Wasser. Dann erfolgt die Produktion des Riemens mit dem auf diese Weise präparierten Zugträger.

Im Rahmen einer Weiterentwicklung der Lehre gemäß WO 2011/068729 A1 besteht die Aufgabe der Erfindung darin, ein Verfahren zur Fertigung eines Riemens mit eingebetten Zugträgern bereitzustellen, das eine reproduzierbare Polymerfüllung der Zugträgerhohlräume ermöglicht und damit eine hohe Prozesssicherheit gewährleistet. Ferner soll mit diesem Verfahren eine gleichmäßige Benetzung aller Zugträgerfasern, auch der innersten Zugträgerfasern, und eine gute Anbindung des Zugträgers an den Riemenkörper realisiert werden.

Diese Aufgabe wurde überraschenderweise durch ein Verfahren zur Fertigung eines Riemens 1 mit einer vorgeschalteten Präparation eines Zugträgers 3 gelöst.

Durch das erfindungsgemäße Verfahren wird eine reproduzierbare Polymerfüllung der Zugträgerhohlräume ermöglicht. Es können sowohl die innersten als auch die äußersten Filamente benetzt werden, so dass ein guter Schutz erreicht wird. Durch die Einbindung aller Fasern in der Kraftübertragung wird eine höhere Lebensdauer erreicht. Außerdem wird eine gute Verträglichkeit zwischen dem präparierten Zugträger und dem Riemenkörper erreicht.

Bevorzugte Ausführungsformen des Verfahrens sind in den abhängigen Ansprüchen angegeben. Im folgenden wird die Erfindung im einzelnen erläutert.

Das erfindungsgemäße Verfahren kann durch die folgenden Verfahrensvarianten I oder II durchgeführt werden.

In der Verfahrensvariante I werden in einer vorgeschalteten Verfahrensstufe der Riemenfertigung Zugträgerhohlräume des Zugträgers 3 wenigstens zum Teil mit Polyurethan gefüllt, indem in einer einzigen Präparationsstufe der Zugträger 3 mit einer Präparationsmischung, umfassend das Polyurethan oder dessen Ausgangskomponenten und mindestens ein Lösungsmittel oder Dispergiermittel, benetzt wird, und der präparierte Zugträger 3 anschließend getrocknet wird.

Während die Präparationsmischung in die Zugträgerhohlräume eindringt, findet je nach den Bedingungen (z.B. Konzentration, Temperatur) bereits eine beginnende Vernetzung statt, wobei zumeist im Rahmen der anschließenden Trocknung eine weitere Vernetzung (Ausvernetzung) erfolgt.

In der Verfahrensvariante II werden in einer vorgeschalteten Verfahrensstufe der Riemenfertigung Zugträgerhohlräume des Zugträgers 3 wenigstens zum Teil mit Polyurethan gefüllt, indem in zwei Präparationsstufen der Zugträger 3 mit einer Präparationsmischung, umfassend ein Polyurethan oder dessen Ausgangskomponenten und mindestens ein Lösungsmittel oder Dispergiermittel, benetzt wird, und der präparierte Zugträger 3 anschließend getrocknet wird.

Für die Verfahrensvariante II mit zwei Präparationsstufen sind folgende Ausführungsformen zweckmäßig bzw. bevorzugt:
- Bei jeder Präparationsstufe wird eine Präparationsmischung eingesetzt, die das gleiche Polyurethan oder die gleichen Ausgangskomponenten enthalten. In den jeweiligen Präparationsmischungen können aber die Konzentration an Lösungsmittel oder Dispergiermittel unterschiedlich sein. Dadurch kann die Benetzung weiter optimiert werden.
- Darüber hinaus kann zwischen jeder Präparationsstufe eine Trocknung durchgeführt werden.
- Hinsichtlich des Vernetzungsablaufs beim Füllvorgang wird auf die Verfahrensvariante I verwiesen.

Während bei der Verfahrensvariante I der Zugträger nur in einer Präparationsstufe mit der Präparationsmischung benetzt wird, wird bei der Verfahrensstufe II bei jeder der mindestens zwei Präparationsstufen der Zugträger mit der Präparationsmischung benetzt. So beziehen sich die folgenden Angaben zu einer Präparationsstufe bzw. zu der darin verwendeten Präparationsmischung sowohl auf die einzelne Präparationsstufe in der Verfahrensvariante I als auch zu jeder Präparationsstufe der mindestens zwei Präparationsstufen in der Verfahrensvariante II.

Die Reaktion (Vernetzung) findet schon während der Trocknung statt, so dass die Reaktion schon zum großen Teil, z.B. zu mehr als 90%, abgeschlossen sein kann, bevor der Zugträger im Riemen verbaut wird. Das endgültige Reaktionsende erfolgt gewöhnlich erst bei der Einbettung in den Riemenkörper. Dadurch ergibt sich eine verbesserte Anbindung des Zugträgers an den Riemenkörper.

Bei beiden Verfahrensvarianten I und II sind folgende verfahrenstechnische Gestaltungsmaßnahmen vorteilhaft:
Die Präparationsmischung umfasst ein Polyurethan oder dessen Ausgangskomponenten. Bei den Ausgangskomponenten handelt es sich insbesondere um ein Polyurethan-Präpolymer und einen Vernetzer, bei deren Umsetzung sich das Polyurethan bildet. Dies wird auch als vernetztes Polyurethan bezeichnet. Bei dem Polyurethan handelt es sich insbesondere um Polyurethan-Elastomere oder thermoplastische Polyurethan-Elastomere. Das Polyurethan ist bevorzugt ein vernetztes Polyurethan-Elastomer.

Das Polyurethan zur Füllung der Zugträgerhohlräume ist gleich dem Polyurethan des Riemenkörpers. Sofern das Polyurethan aus einem Polyurethan-Präpolymer und einem Vernetzer gebildet wird, bedeutet dies, dass sowohl das Präpolymer als auch der Vernetzer in beiden Fällen gleich sind. Polyurethane werden im wesentlichen durch Umsetzung von Polyolen und Polyisocyanaten gebildet, so dass durch Auswahl der Polyole und Poyisocyanate unterschiedliche Polyurethane gebildet werden können. Es ist bevorzugt, dass das Polyurethan zur Füllung der Zugträgerhohlräume und das Polyurethan des Riemenkörpers ein vernetztes Polyurethan ist, besonders bevorzugt ein vernetztes Polyurethan-Elastomer.

In einer Ausführungsform kann die Präparationsmischung das Polyurethan enthalten, das in dem Lösungsmittel oder Dispergiermittel gelöst oder dispergiert ist, wobei das Polyurethan bevorzugt in dem Lösungsmittel gelöst vorliegt.

In der bevorzugten Ausführungsform umfasst die Präparationsmischung die Ausgangskomponenten des Polyurethans, d.h. sie umfasst ein Polyurethan-Präpolymer und einen Vernetzer.

Polyurethan-Präpolymere sind dem Fachmann bekannt und im Handel erhältlich. Sie können durch Umsetzung von Polyolen mit Polyisocyanaten, insbesondere Diisocyanaten, gebildet werden. Polyole sind Verbindungen mit mindestens zwei Hydroxylgruppen. Polyisocyanate sind Verbindungen mit mindestens zwei Isocyanatgruppen. Durch die Auswahl der eingesetzten Polyole und Polyisocyanate werden unterschiedliche Polyurethan-Präpolymere mit anderen Eigenschaften erhalten.

Beispiele für Polyole und Polyisocyanate, insbesondere Diisocyanate, und daraus gebildete Polyurethan-Präpolymere werden beispielsweise in WO 2011/068729 A1 beschrieben, worauf hiermit Bezug genommen wird. Die Polyurethan-Präpolymere können beispielsweise aus Polyolen ausgewählt aus Polyesterpolyolen, Polycarbonatpolyolen und Polyetherpolyolen und Diisocyanaten, wie para-Phenylendiisocyanat und 4,4'-Methylendiphenyldiisocyanat, gebildet werden.

Vernetzer für Polyurethan-Präpolymere sind dem Fachmann bekannt und schließen auch Kettenverlängerer ein. Durch den Vernetzer erfolgt eine Vernetzung des Polyurethan-Präpolymers, was auch eine Kettenverlängerung einschließt, wodurch eine Härtung erfolgt.

Der Vernetzer für das Polyurethan-Präpolymer ist bevorzugt ein Diol, insbesondere ein Butandiol, besonders bevorzugt 1,4-Butandiol. Diole sind vorteilhaft, weil sie verglichen mit anderen bekannten Vernetzern, wie Polyaminen, insbesondere Diaminen, oder Wasser, eine geringere Reaktivität gegenüber Isocyanatverbindungen aufweisen, so dass die Präparationsmischung besser eingestellt werden kann, z.B. im Hinblick auf die gewünschte Präpolymer-Konzentration oder Viskosität. Bei Wasser als Vernetzer kann auch das bei der Reaktion freigesetzte CO₂ störend sein.

Die Präparationsmischung umfasst ferner mindestens ein Lösungsmittel oder Dispergiermittel. Bei dem eingesetzten Lösungsmittel oder Dispergiermittel handelt es sich insbesondere um ein inertes Lösungsmittel oder Dispergiermittel, d.h. es reagiert nicht mit den anderen Komponenten der Präparationsmischung. Es können alle üblichen organischen Lösungsmittel bzw. Dispergiermittel oder Mischungen davon eingesetzt werden. Beispielhaft seien Toluol, Xylole, Tetrahydrofuran, Dimethylformamid, Aceton und Methylethylketon genannt.

Sofern die Präparationsmischung die Ausgangskomponenten des Polyurethans enthält, ist es bevorzugt, dass die Ausgangskomponenten der Präparationsmischung, d.h. das Polyurethan-Präpolymer und der Vernetzer, zunächst unabhängig voneinander jeweils in einem Lösungsmittel oder Dispergiermittel, das gleich (z.B. Toluol) oder verschieden (z.B. Toluol, Xylol) sein kann, gelöst bzw. dispergiert werden, die dann vor, bevorzugt unmittelbar vor Beginn der Präparation des Zugträgers unter Bildung einer noch niedrigviskosen Präparationsmischung vermischt werden.

Bei der Präparationsmischung handelt es sich daher bevorzugt um ein niedrigviskoses Gemisch, wenn sie für die Benetzung des Zugträgers eingesetzt wird. Sie kann so durch Kapillarwirkung gleichmäßig tief in das Faserbündel des Zugträgers eindringen und den Zugträger umhüllen. Dadurch wird gewährleistet, dass jedes Filament im Querschnitt des Zugträgers benetzt wird und ein hoher Füllgrad der Hohlräume des Zugträgers erreicht werden kann. Ferner wird die chemische Reaktion der Komponenten durch das Lösungsmittel bzw. Dispergiermittel gehemmt, so dass auch eine gute Kontrolle der Viskosität möglich ist. Beim anschließenden Trocknungsprozess unter Verdampfen des Lösungsmittels bzw. Dispergiermittels beginnt zumeist der eigentliche Start der Reaktion.

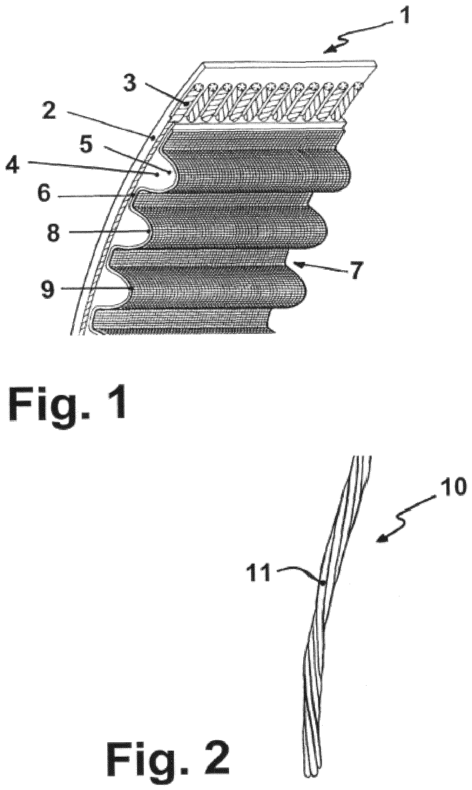

Als Zugträger eignen sich z.B. alle in der Technik bekannten Stränge oder Litzen aus Fasern bzw. Filamenten, insbesondere Zugträger in Cordkonstruktion (Cords). Die Zugträger weisen im Inneren Hohlräume auf. Bevorzugt sind Zugträger aus einem faserförmigen Material. Das faserförmige Material ist bevorzugt ein elektrisch leitfähiges Material. Aus den Fasern können Filamente gebildet werden, die auch als Faserfilamente bezeichnet werden. Die Zugträger können aus Strängen oder Litzen aus Fasern bzw. Filamenten und/oder einer Gruppe von Litzen aus Fasern bzw. Filamenten, die allgemein als Cords bezeichnet werden, gebildet sein. Der Aufbau der Litzen und Cords wird nachstehend unter Bezugnahme auf Fig. 2 näher erläutert. Die dort gemachten Angaben gelten ganz allgemein.

Im allgemeinen sind Zugträger in Cordkonstruktion bevorzugt. Es sind aber auch Zugträger bekannt, z.B. Zugträger aus Carbon-Fasern, die üblicherweise nicht in der klassischen Cordkonstruktion gebildet werden. Sie können z.B. aus Strängen oder Litzen aus dem faserförmigen Material gebildet sein. Sie werden hier wie in der Technik üblich ebenfalls als Cords bezeichnet. Zugträger aus Carbon-Fasern können aber auch in klassischer Cordkonstruktion vorliegen.

Beispiele sind übliche Zugträger bzw. Cords, bei denen die Fasern bzw. Filamente aus Stahl, Polyamid (PA), Aramid, Polyester, Carbon (Kohle), Basalt, Polyetheretherketon (PEEK), Polyethylentherephthalat (PET), Polybenzoxazol (PBO) oder Polyethylen-2,6-naphthalat (PEN) gebildet sind.

Es kann sich bei den Zugträgern auch um Hybrid-Zugträger handeln. Hybrid-Zuträger sind aus Fasern bzw. Filamenten aus mindestens zwei unterschiedlichen Werkstoffen, z.B. den vorstehend Genannten, gebildet, wobei der Anteil der jeweiligen Werkstoffs z.B. 1 bis 99 Gew.-% betragen kann. In einer vorteilhaften Ausführungsform sind Fasern mit höherem Modul innen im Kern und Fasern mit niedrigerem Modul außen. Ein klassisches Beispiel sind z.B. Zuträger aus Carbon-Fasern im Kern und Glas-Fasern als Mantel.

Erfindungsgemäß bevorzugt sind Zugträger aus Carbon-Fasern, Glas-Fasern, Aramid-Fasern oder Basalt-Fasern oder Hybrid-Zugträger aus mindestens zwei dieser Fasern. Bei den Aramid-Fasern können Para-Aramid, Para-Aramid-Copolymere oder Meta-Aramid verwendet werden. Von besonderer Bedeutung sind Zugträger aus Carbon-Fasern und Hybrid-Zugträger aus Carbon-Fasern und Fasern aus mindestens einem anderen Material. Die Benetzung des Zugträgers mit der Präparationsmischung und die Trocknung erfolgen durch ein Pultrusionsverfahren.

Die Eindringtiefe und Menge des Füllmaterials können ferner z.B. durch folgende Parameter beeinflusst werden: Viskosität der Präparationsmischung; Mischungsverhältnis von Lösungsmittel/Dispergiermittel zu den Komponenten (Polyurethan oder dessen Ausgangskomponenten); Temperatur; Druck; Verweildauer; Anzahl der Präparationsstufen (Tauchgänge) bei der Verfahrensvariante II. Die nachfolgenden Merkmale sind zweckmäßig, insbesondere wenn ein recht hoher Füllgrad erreicht werden soll, und können einzeln oder auch kombiniert miteinander verwendet werden und gelten für Verfahrensvariante I und bei Verfahrensvariante II für jede Präparations stufe, sofern nicht anders angegeben.

Beispielsweise liegt in der Präparationsmischung der Anteil an Lösungsmittel oder Dispergiermittel, bezogen auf die Gesamtmenge an Lösungsmittel oder Dispergiermittel, Präpolymer und Vernetzer, im Bereich von 1 bis 90 Gew.-%, bevorzugter im Bereich von 20 bis 60 Gew.-%, bei Verfahrensvariante I, und im Bereich von 1 bis 90 Gew.-%, bevorzugter im Bereich von 30 bis 70 Gew.-%, bei Verfahrensvariante II.

Die für die Benetzung des Zugträgers eingesetzte Präparationsmischung hat z.B. vorzugsweise eine Viskosität im Bereich von 1 mPas bis 1000 mPas, bevorzugt 5 bis 150 mPas, bei Verfahrensvariante I, und im Bereich von 1 mPas bis 1000 mPas, bevorzugt 20 bis 500 mPas, bei Verfahrensvariante II. Die Viskosität wird bei einer Temperatur von 20°C gemäß ASTM D-445 bestimmt.

Der präparierte Zugträger kann bei Umgebungstemperatur getrocknet werden. Der präparierte Zugträger wird aber bevorzugt bei einer erhöhten Temperatur getrocknet, die z.B. gleich oder höher, bevorzugt mindestens 5°C höher, z.B. 20°C höher, als der Siedepunkt des Lösungsmittels oder Dispergiermittels in der Präparationsmischung ist. Die Trocknung kann z.B. bei einer Temperatur im Bereich von 80°C bis 300°C, bevorzugt von 120 bis 250°C, durchgeführt werden.

Die Benetzung und/oder Trocknung können bei Unterdruck, Überdruck oder Umgebungsdruck durchgeführt werden. Beispielsweise bei einem Druck von 0 bis 100 bar Überdruck, bevorzugt 0 bis 1 bar Überdruck, z.B. bei Umgebungsdruck.

Die Verweildauer des Zugträgers bei der erhöhten Temperatur zur Trocknung kann in Abhängigkeit von vielen anderen Faktoren, wie z.B. Kanallänge, Verfahrgeschwindigkeit, Topfzeit oder Temperatur, variieren. Beispielhaft kann die Verweildauer im Bereich von 0 bis 6000 s bzw. 0,1 s bis 6000 s, bevorzugt 30 bis 300 s liegen. Eine Verweildauer von 0 s bedeutet eine Trocknung bei Umgebungstemperatur, was aber in der Regel nicht bevorzugt ist.

Bei der Verfahrensvariante II kann die Anzahl an Präparationsstufen (z.B. Tauchgänge) z.B. 2 bis 5, bevorzugt 2 oder 3 betragen.

Durch die Benetzung des Zugträgers werden die Zugträgerhohlräume gefüllt. Es ist auch ein recht hoher oder im wesentlichen vollständiger Füllungsgrad möglich, so dass 80 bis 100 %, der Zugträgerhohlräume mit dem Polyurethan ausgefüllt sind, insbesondere nach der Verfahrensvariante II.

Wenn bei einem nachfolgenden Gießprozess der präparierte Zugträger in eine Gießmasse, die ein Polyurethan oder dessen Ausgangskomponenten umfasst, eingebettet wird, beträgt die eindringende Menge an Polyurethan in den Zugträger bevorzugt weniger als 0,2 mg/mm³ und kann bei vollständiger Füllung der Zugträger in der vorgeschalteten Verfahrensstufe auch 0 sein. Die eindringende Menge an Polyurethan bedeutet dabei gemäß EP 0841500 A2 die Menge an Riemenkörpermaterial in mg pro mm³ Zugträgervolumen, die der Zugträger beim Gießen aufnimmt. Zur Messung bestimmt man die Gewichtsdifferenz von dem Gewicht eines gemäß der ersten Verfahrensstufe präparierten Zugträgers bestimmter Länge und dem Gewicht eines so präparierten Zugträgers gleicher Länge, der nach Fertigung eines Riemens aus dem Riemenkörper herausgelöst worden ist.

Der Zugträger wird durch die Benetzung und Trocknung nach Verfahrensvariante I oder II gegebenenfalls auch mit einer Hüllschicht aus Polyurethan versiegelt werden. Durch diese Beschichtung wird die Zugträgeroberfläche bedeckt. Die nach der Trocknung erhaltene Hüllschicht aus Polyurethan weist z.B. eine Schichtdicke von nicht mehr als 1 mm, bevorzugt nicht mehr als 0,1 mm auf. Die Schichtdicke der Hüllschicht aus Polyurethan, beträgt vorzugsweise mindestens 5 µm.

Die Verfahrensvariante II ist zur Herstellung des präparierten Zugträgers bevorzugt, insbesondere wenn ein hoher oder nahezu vollständiger Füllungsgrad der Hohlräume erreicht werden soll.

Mit dem nach beiden Verfahrensvarianten I und II präparierten Zugträger wird dann die Riemenfertigung vorgenommen. Hierfür wird der in der vorgeschalteten Verfahrensstufe präparierte Zugträger in das Polyurethan des Riemenkörpers eingebettet. Die Riemenfertigung wird auf allgemein bekannte Art durchgeführt, es kann beispielsweise auf den eingangs zitierten Stand der Riementechnologie verwiesen.

Zur Herstellung des Riemenkörpers und Einbettung des Zugträgers kann z.B. als Ausgangsmaterial eine Masse, insbesondere eine Gießmasse oder eine Extrudiermasse, verwendet werden, die das Polyurethan oder dessen Ausgangskomponenten, d.h. Polyurethan-Präpolymer und Vernetzer, enthält. Da das Polyurethan dasselbe ist, das auch für die Füllung des Zugträgers verwendet wird, kann auf die dortigen Angaben zum Polyurethan oder dessen Ausgangskomponenten verwiesen werden. Bevorzugt ist der Riemenkörper aus einem vernetzten Polyurethan.

Die Masse, insbesondere eine Gießmasse oder eine Extrudiermasse, kann zusätzliche Mischungsingredienzien enthalten. Beispiele für zusätzliche Mischungsingredienzien sind Beschleuniger, Füllstoffe, Verarbeitungshilfsmittel, Weichmacher, Alterungsschutzmittel sowie gegebenenfalls weitere Zusatzstoffe, beispielsweise Fasern zwecks Verstärkung und Farbpigmente.

Die Einbettung des in der vorgeschalteten Verfahrensstufe erhaltenen Zugträgers in das Polyurethan des Riemenkörpers erfolgt bevorzugt durch ein Gießverfahren oder ein Extrudierverfahren, wobei ein Gießverfahren bevorzugt ist. Der präparierte Zugträger wird hierbei in eine vorstehend erläuterte Extrudier- oder Gießmasse für den Riemenkörper eingebettet. Anschließend wird die Extrudier- oder Gießmasse ausgehärtet.

Bei dem bevorzugten Gießverfahren wird bevorzugt eine Gießmasse eingesetzt, die ein Polyurethan-Präpolymer und einen Vernetzer als Ausgangskomponenten des Polyurethans umfasst.

Der erhaltene Riemen kann weiteren üblichen Bearbeitungsstufen unterworfen werden, beispielsweise kann die Kraftübertragungszone auf die übliche Weise bearbeitet werden, wie im einleitenden Teil beschrieben.

Der Riemen kann als Kraftübertragungsriemen verwendet werden, z.B. als Zahnriemen, wie extrudierte Zahnriemen, Transportband, Flachriemen, Keilriemen, Keilrippenriemen oder Verbundseil.

Die Erfindung wird nun anhand eines Ausführungsbeispiels unter Bezugnahme auf schematische Zeichnungen näher erläutert. Es zeigen:
- Fig. 1: einen Zahnriemen mit einem nach der Verfahrensvariante I oder II PU-präparierten Zugträger;
- Fig. 2: eine Litze, gebildet aus Filamenten als Basis einer Cordkonstruktion.

Fig. 1 zeigt einen Riemen 1 in Form eines Zahnriemens mit einer Decklage 2 als Riemenrücken, einem eingebetteten Zugträger 3 mit mehreren in Riemenlängsrichtung parallel verlaufenden Zugsträngen sowie einem Unterbau 4. Der Unterbau ist mit einer zahnförmigen Profilierung, umfassend Zähne 5 und Zahnstege 6, versehen und umfasst die Kraftübertragungszone 7.

Die Decklage 2 und der Unterbau 4 bilden dabei als Gesamteinheit den Riemenkörper aus einem vernetzten Polyurethan mit elastischen Eigenschaften.

Der Zugträger 3 ist insbesondere aus Carbon-Fasern gebildet, wobei der Zugträger mit einem vernetzten Polyurethan, der dem Polyurethan des Riemenkörpers entspricht, präpariert ist, was in Verbindung mit Fig. 2 noch näher erläutert wird.

Die Kraftübertragungszone 7 des Riemens ist besonders verschleißanfällig durch Abrieb, Hitze und den Einfluss durch Öle. Aus diesem Grunde wird die Kraftübertragungszone zumeist mit einer Textilauflage 8, beispielsweise in Form eines Gewebes, versehen. Diese Textilauflage wird beispielsweise nach der Lehre des Dokumentes WO 2005/080821 A1 zusätzlich mit einem fluorhaltigen Kunststoff, der insbesondere Polytetrafluorethylen (PTFE) ist, getränkt, und zwar bei einem hohen Füllungsgrad des Kunststoffes, wobei gleichzeitig eine Polymerbeschichtung (Versiegelung) als zusätzliche ölbeständige Schutzschicht 9 gebildet wird. Die beiden Teilschichten 8 und 9 mit unterschiedlichen Funktionen treten hier als gemeinsame Schutzschicht auf.

Auch die Decklage 2 des Riemens 1 kann mit einer Textilauflage versehen werden, beispielsweise in der oben beschriebenen Art.

Der Riemen 1 in seiner besonderen Ausführung als Zahnriemen ist z.B. dafür geeignet, eine Ölpumpe eines Motors, beispielsweise eines KFZ-Motors, anzutreiben.

Fig. 2 zeigt eine Litze 10, gebildet aus einer Gruppe von Filamenten 11, wobei z.B. 100 bis 1000 Filamente, insbesondere 500 bis 700 Filamente, eine Litze bilden. Die Litze liegt dabei zumeist als Litzenhelix vor, was in der Fig. 2 verdeutlicht wird. Eine Gruppe von Litzen bildet schließlich den Cord. Zumeist besteht ein Cord aus wenigstens fünf Litzen, insbesondere aus 10 bis 20 Litzen. Bei Carbon-Fasern kann der Zugträger wie gesagt auch aus nur einem Strang bzw. einer Litze gebildet sein.

Die Filamente 11 sind aus einem Fasermaterial gebildet, insbesondere aus Carbon-Fasern. Man spricht in diesem Zusammenhang auch von Faserfilamenten.

Die gesamte Zugträger-Konstruktion oder Cordkonstruktion, umfassend das Gesamtsystem von Fasern, Filamenten und Litzen, beinhaltet Hohlräume, nämlich innerhalb der Fasern sowie zwischen den Filamenten und Litzen, die nun im Rahmen der Präparation mit dem vernetzten Polyurethan ausgefüllt werden, wobei das Füllmaterial eine sehr gute mechanische Anbindung zu den Faserfilamenten und somit zum Zugträger und anderseits eine sehr gute chemische Anbindung zum Riemenkörper aufweist.

### Bezugszeichenliste

- 1: Riemen in Form eines Zahnriemens
- 2: Decklage als Riemenrücken
- 3: Zugträger
- 4: Unterbau
- 5: Zahn
- 6: Zahnsteg
- 7: Kraftübertragungszone
- 8: Textilauflage (Zahnauflage)
- 9: Schutzschicht
- 10: Litze
- 11: Filament

## Patentansprüche

1. Verfahren zur Fertigung eines Riemens (1) mit einer vorgeschalteten Präparation eines Zugträgers (3), wobei der Riemen (1)
einen Riemenkörper aus einem Polyurethan mit elastischen Eigenschaften, umfassend eine Decklage (2) als Riemenrücken und einen Unterbau (4) mit einer Kraftübertragungszone (7); und
einen in dem Riemenkörper eingebetteten Zugträger (3), wobei der Zugträger (3) mit Polyurethan präpariert ist;
umfasst,
wobei in einer vorgeschalteten Verfahrensstufe der Riemenfertigung Zugträgerhohlräume des Zugträgers (3) im wesentlichen vollständig mit dem Polyurethan gefüllt werden, indem in einer einzigen Präparationsstufe oder in zwei Präparationsstufen der Zugträger (3) mit einer Präparationsmischung, umfassend das Polyurethan oder dessen Ausgangskomponenten und mindestens ein Lösungsmittel oder Dispergiermittel, benetzt wird, und der präparierte Zugträger (3) anschließend getrocknet wird,
und wobei das Polyurethan zur Füllung der Zugträgerhohlräume gleich dem Polyurethan des Riemenkörpers ist und
**dadurch gekennzeichnet, dass** der Zugträger (3) mit einer Hüllschicht aus dem Polyurethan versiegelt wird, und, dass die Benetzung des Zugträgers mit der Präparationsmischung und die Trocknung durch ein Pultrusionsverfahren erfolgen und dass die Zugträgeroberfläche mit einer Hüllschicht aus Polyurethan mit einer Schichtdicke zwischen 5µm und 1 mm bedeckt wird.

2. Verfahren nach Anspruch 1, **dadurch gekennzeichnet, dass** das Polyurethan zur Füllung der Zugträgerhohlräume und das Polyurethan des Riemenkörpers ein vernetztes Polyurethan ist.

3. Verfahren nach Anspruch 1 oder 2, **dadurch gekennzeichnet, dass** die Präparationsmischung ein Polyurethan-Präpolymer und einen Vernetzer als Ausgangskomponenten des Polyurethans umfasst.

4. Verfahren nach Anspruch 3, **dadurch gekennzeichnet, dass** als Vernetzer ein Diol, bevorzugt ein Butandiol, eingesetzt wird.

5. Verfahren nach einem der Ansprüche 3 bis 4, **dadurch gekennzeichnet, dass** die Präparationsmischung hergestellt wird, indem eine Präpolymer-Mischung, die das Polyurethan-Präpolymer gelöst oder dispergiert in einem Lösungsmittel oder Dispergiermittel umfasst, mit einer Vernetzer-Mischung, die den Vernetzer gelöst oder dispergiert in einem Lösungsmittel oder Dispergiermittel umfasst, gemischt wird, wobei die Lösungsmittel oder Dispergiermittel für die Präpolymer-Mischung und die Vernetzer-Mischung gleich oder verschieden sein können.

6. Verfahren nach einem der Ansprüche 1 bis 2, **dadurch gekennzeichnet, dass** die Präparationsmischung das Polyurethan umfasst, das in dem Lösungsmittel gelöst ist.

7. Verfahren nach einem der Ansprüche 1 bis 6, **dadurch gekennzeichnet, dass** die Einbettung des in der vorgeschalteten Verfahrensstufe erhaltenen Zugträgers (3) in das Polyurethan des Riemenkörpers durch ein Gießverfahren oder ein Extrudierverfahren erfolgt.

8. Verfahren nach einem der Ansprüche 1 bis 7, **dadurch gekennzeichnet, dass** der in der vorgeschalteten Verfahrensstufe erhaltene Zugträger (3) in eine Extrudier- oder Gießmasse für den Riemenkörper, die das Polyurethan oder dessen Ausgangskomponenten umfasst, eingebettet wird und die Extrudier- oder Gießmasse anschließend ausgehärtet wird.

9. Verfahren nach Anspruch 8, **dadurch gekennzeichnet, dass** die Gießmasse ein Polyurethan-Präpolymer und einen Vernetzer als Ausgangskomponenten des Polyurethans umfasst.

10. Verfahren nach einem der Ansprüche 1 bis 9, **dadurch gekennzeichnet, dass** ein Zugträger (3) aus einem faserförmigen Material eingesetzt wird.

11. Verfahren nach Anspruch 10, **dadurch gekennzeichnet, dass** ein Zugträger (3) aus Carbon-Fasern, Glas-Fasern, Aramid-Fasern oder Basalt-Fasern oder ein Hybrid-Zugträger aus mindestens zwei Fasern ausgewählt aus Carbon-Fasern, Glas-Fasern, Aramid-Fasern und Basalt-Fasern eingesetzt wird, wobei ein Zugträger aus Carbon-Fasern oder ein Hybrid-Zugträger aus Carbon-Fasern und mindestens einem anderen Fasermaterial bevorzugt ist.

12. Verfahren nach einem der Ansprüche 1 bis 11, **dadurch gekennzeichnet, dass** als Zugträger (3) ein Zugträger in Cordkonstruktion eingesetzt wird.

13. Verfahren nach einem der Ansprüche 1 bis 12, **dadurch gekennzeichnet, dass** bei Durchführung von zwei Präparationsstufen zwischen jeder Präparationsstufe eine Trocknung durchgeführt wird.

14. Verfahren nach einem der Ansprüche 1 bis 13, **dadurch gekennzeichnet, dass** der Riemen (1) ein Riemen (1) für die Antriebstechnik ist, wobei der Riemen bevorzugt ein Zahnriemen (1), ein Transportband oder ein Keilrippenriemen ist.

## Claims

1. Method of manufacturing a belt (1) with an upstream preparation of a tension member (3), wherein the belt (1) comprises
a belt body composed of a polyurethane having elastic properties, comprising an outer layer (2) as belt backing and a substructure (4) with a force transmission zone (7); and
a tension member (3) embedded within the belt body, where the tension member (3) has been prepared with polyurethane;
where
in a preceding method stage in the belt manufacture tension member cavities of the tension member (3) are filled essentially completely with the polyurethane by, in a single preparation stage or in two preparation stages, wetting the tension member (3) with a preparation mixture comprising the polyurethane or starting components thereof and at least one solvent or dispersant, and then drying the prepared tension member (3), and
wherein the polyurethane for filling of the tension member cavities is the same as the polyurethane of the belt body and
**characterized in that**
the tension member (3) is sealed with an envelope layer of the polyurethane, and **in that** the wetting of the tension member with the preparation mixture and the drying are effected by a pultrusion method, and **in that** the tension member surface is covered with an envelope layer of polyurethane having a layer thickness between 5 *µ*m and 1 mm.

2. Method according to Claim 1, **characterized in that** the polyurethane for filling of the tension member cavities and the polyurethane of the belt body is a crosslinked polyurethane.

3. Method according to Claim 1 or 2, **characterized in that** the preparation mixture comprises a polyurethane prepolymer and a crosslinker as starting components of the polyurethane.

4. Method according to Claim 3, **characterized in that** the crosslinker used is a diol, preferably a butanediol.

5. Method according to either of Claims 3 and 4, **characterized in that** the preparation mixture is prepared by mixing a prepolymer mixture comprising the polyurethane prepolymer dissolved or dispersed in a solvent or dispersant with a crosslinker mixture comprising the crosslinker dissolved or dispersed in a solvent or dispersant, where the solvents or dispersants for the prepolymer mixture and the crosslinker mixture may be the same or different.

6. Method according to either of Claims 1 and 2, **characterized in that** the preparation mixture comprises the polyurethane dissolved in the solvent.

7. Method according to any of Claims 1 to 6, **characterized in that** the tension member (3) obtained in the preceding method stage is embedded into the polyurethane of the belt body by a casting method or an extrusion method.

8. Method according to any of Claims 1 to 7, **characterized in that** the tension member (3) obtained in the preceding method stage is embedded into an extrusion compound or casting compound for the belt body comprising the polyurethane or starting components thereof and then the extrusion compound or casting compound is cured.

9. Method according to Claim 8, **characterized in that** the casting compound comprises a polyurethane prepolymer and a crosslinker as starting components of the polyurethane.

10. Method according to any of Claims 1 to 9, **characterized in that** a tension member (3) made of a fibrous material is used.

11. Method according to Claim 10, **characterized in that** a tension member (3) made of carbon fibres, glass fibres, aramid fibres or basalt fibres or a hybrid tension member made of at least two fibres selected from carbon fibres, glass fibres, aramid fibres or basalt fibres is used, preference being given to a tension member made of carbon fibres or a hybrid tension member made of carbon fibres and at least one other fibre material.

12. Method according to any of Claims 1 to 11, **characterized in that** the tension member (3) used is a tension member in cord construction.

13. Method according to any of Claims 1 to 12, **characterized in that**, when two preparation stages are performed, a drying operation is conducted between each preparation stage.

14. Method according to any of Claims 1 to 13, **characterized in that** the belt (1) is a belt (1) for drive technology, where the belt is preferably a toothed belt (1), a conveyor belt or a V-ribbed belt.

## Revendications

1. Procédé de fabrication d'une courroie (1) avec une préparation préalable d'un élément de traction (3), dans lequel la courroie (1) comprend
un corps de courroie en un polyuréthane ayant des propriétés élastiques, comprenant une couche de couverture (2) comme dos de courroie et une base (4) avec une zone de transmission de force (7); et
un élément de traction (3) noyé dans le corps de courroie, dans lequel l'élément de traction (3) est préparé avec du polyuréthane;
dans lequel, dans une étape de procédé préalable de la fabrication de la courroie, on remplit essentiellement entièrement des cavités d'élément de traction de l'élément de traction (3) avec le polyuréthane, par le fait que dans une unique étape de préparation ou dans deux étapes de préparation on mouille l'élément de traction (3) avec un mélange de préparation, comprenant le polyuréthane ou ses composants de départ et au moins un agent solvant ou un agent dispersant, et on sèche ensuite l'élément de traction préparé (3), et
dans lequel le polyuréthane destiné au remplissage des cavités d'élément de traction est identique au polyuréthane du corps de courroie, et
**caractérisé en ce que** l'on scelle l'élément de traction (3) avec une couche d'enveloppe en ce polyuréthane et **en ce que** l'on effectue le mouillage de l'élément de traction avec le mélange de préparation et le séchage par un procédé de pultrusion, et **en ce que** l'on recouvre la surface de l'élément de traction avec une couche d'enveloppe en polyuréthane avec une épaisseur de couche comprise entre 5 *µ*m et 1 mm.

2. Procédé selon la revendication 1, **caractérisé en ce que** le polyuréthane destiné au remplissage de cavités d'élément de traction et le polyuréthane du corps de courroie sont un polyuréthane réticulé.

3. Procédé selon la revendication 1 ou 2, **caractérisé en ce que** le mélange de préparation contient un pré-polymère de polyuréthane et un agent réticulant comme composants de départ du polyuréthane.

4. Procédé selon la revendication 3, **caractérisé en ce que** l'on utilise comme agent réticulant un diol, de préférence un butanediol.

5. Procédé selon une des revendications 3 à 4, **caractérisé en ce que** l'on fabrique le mélange de préparation en mélangeant un mélange de pré-polymère, qui comprend le pré-polymère de polyuréthane dissous ou dispersé dans un agent solvant ou un agent dispersant, avec un mélange d'agent réticulant, qui comprend l'agent réticulant dissous ou dispersé dans un agent solvant ou un agent dispersant, dans lequel les agents solvants ou les agents dispersants pour le mélange de pré-polymère et le mélange d'agent réticulant peuvent être identiques ou différents.

6. Procédé selon l'une quelconque des revendications 1 à 2, **caractérisé en ce que** le mélange de préparation comprend le polyuréthane, qui est dissous dans l'agent solvant.

7. Procédé selon l'une quelconque des revendications 1 à 6, **caractérisé en ce que** l'on effectue l'incorporation de l'élément de traction (3) obtenu dans l'étape de procédé préalable dans le polyuréthane du corps de courroie par un procédé de coulée ou un procédé d'extrusion.

8. Procédé selon l'une quelconque des revendications 1 à 7, **caractérisé en ce que** l'on incorpore l'élément de traction (3) obtenu dans l'étape de procédé préalable dans une masse d'extrusion ou de coulée destinée au corps de courroie, qui comprend le polyuréthane ou ses composants de départ, et on durcit ensuite la masse d'extrusion ou de coulée.

9. Procédé selon la revendication 8, **caractérisé en ce que** la masse de coulée comprend un pré-polymère de polyuréthane et un agent réticulant comme composants de départ du polyuréthane.

10. Procédé selon l'une quelconque des revendications 1 à 9, **caractérisé en ce que** l'on utilise un élément de traction (3) en un matériau fibreux.

11. Procédé selon la revendication 10, **caractérisé en ce que** l'on utilise un élément de traction (3) en fibres de carbone, en fibres de verre, en fibres d'aramide ou en fibres de basalte ou un élément de traction hybride en au moins deux fibres sélectionnées parmi les fibres de carbone, les fibres de verre, les fibres d'aramide et les fibres de basalte, dans lequel un élément de traction en fibres de carbone ou un élément de traction hybride en fibres de carbone et au moins un autre matériau fibreux est préféré.

12. Procédé selon l'une quelconque des revendications 1 à 11, **caractérisé en ce que** l'on utilise comme élément de traction (3) un élément de traction avec une structure de câble.

13. Procédé selon l'une quelconque des revendications 1 à 12, **caractérisé en ce que** lors de l'exécution de deux étapes de préparation on opère un séchage entre chaque étape de préparation.

14. Procédé selon l'une quelconque des revendications 1 à 13, **caractérisé en ce que** la courroie (1) est une courroie (1) destinée à la technique d'entraînement, dans lequel la courroie est de préférence une courroie dentée (1), une bande transporteuse ou une courroie à nervures trapézoïdales.
